# FASCICULE DE BREVET EUROPEEN

(11) **EP 1 036 935 B1**
(45) Date de publication et mention de la délivrance du brevet: **22.09.2004**
(21) Numéro de dépôt: 00400390.1
(22) Date de dépôt: 10.02.2000
(51) Int. Cl.: F02M 69/46, F02M 21/02

(54) **Système d'alimentation en carburant liquide sous pression d'un moteur a combustion interne**
Hochdruckflüssigkraftstoffversorgungsanlage einer Brennkraftmaschine
System for supplying pressurised liquid fuel to an internal combustion engine

(30) Priorité: 18.03.1999 FR 9903632
(43) Date de publication de la demande: 20.09.2000
(73) Titulaire: Institut Français du Pétrole, 92852 Rueil-Malmaison Cedex (FR)
(72) Inventeur: Monnier, Gaétan, 78955 Carrières sous Poissy (FR)

(56) Documents cités:
- WO-A-92/08888
- WO-A-96/35863
- US-A- 5 033 444
- US-A- 5 775 281

## Description

La présente invention concerne le domaine des moteurs à injection directe ou indirecte de carburant liquide dans au moins une chambre de combustion.

Le carburant peut être du pétrole liquéfié ou du gaz naturel liquéfié, du dimethylether (DME), de l'éthylal, du méthylal ou du diéthyléther (DEE).

Il est connu d'utiliser ces carburants en mélange avec l'air d'admission. La demande WO 96/35863 décrit un système basé sur ce concept où un mélange d'air et de carburant liquéfié est réalisé en amont des chambres de combustion et en complément d'un système d'injection d'essence classique (ici de type "common rail"). Cependant des problèmes de vaporisation du combustible ont été constatées dans ce type d'alimentation. Pour y remédier, cet art antérieur propose de mélanger le carburant liquide à l'air d'admission à un endroit relativement éloigné de la chambre de combustion : ainsi les températures y sont moins chaudes et une meilleure vaporisation peut être réalisée.

Des développements récents ont permis d'introduire le carburant sous forme liquide, directement ou en mélange avec de l'air, dans la chambre de combustion. Ceci nécessite un maintien en pression de tout le système d'alimentation, depuis le réservoir jusqu'au lieu de la vaporisation : chambre de combustion dans le cas de l'injection directe, ou conduits d'admission en injection indirecte.

Un problème important consiste alors dans le maintien et le contrôle de l'état liquide par la pression dans tout le système d'alimentation quelles que soient les conditions de fonctionnement du moteur et les conditions extérieures. En effet, la variation de pression de liquéfaction peut varier de 1 à 18 bars selon la température d'utilisation du carburant.

Généralement le réservoir de carburant est prévu pour résister à ce type de pressions de sorte que le stockage à l'état liquide ne pose pas de problème à ce niveau du circuit d'alimentation.

Cependant, il n'en est pas de même dans les autres parties du circuit d'alimentation et notamment entre le réservoir et les injecteurs.

Plus précisément, un problème se pose lors du redémarrage du moteur suite à un arrêt prolongé du moteur.

Ce phénomène peut s'expliquer de la façon suivante : les injecteurs étant perméables au fluide, une faible fuite de liquide se produit à l'arrêt du moteur, ce qui abaisse la pression dans le système d'alimentation et change donc l'état du carburant qui passe de l'état liquide à l'état gazeux. La fuite est ainsi entretenue.

Après un temps d'immobilisation du véhicule plus ou moins long, qui dépend des conditions de stockage et de la structure même des injecteurs, le carburant (à l'origine liquide) contenu dans le système d'alimentation peut ainsi être vaporisé et transféré dans le moteur ; soit directement dans la chambre de combustion, soit via l'admission.

Au redémarrage du moteur, le combustible vaporisé est présent en grande quantité dans la chambre de combustion, ce qui génère un mélange ininflammable (cas du gaz de pétrole liquéfié/GPL) ou encore de l'auto-inflammation (cas du diméthyléther/DME).

Une solution connue consiste à isoler chaque injecteur de la rampe par une électro-vanne, lorsque le véhicule est immobilisé. Cependant cette solution est complexe, encombrante et onéreuse.

Pour résoudre notamment les problèmes liés au mauvais maintien en pression du système d'alimentation dans de tels moteurs, la présente invention propose une solution innovante, à la fois simple et fiable.

Il s'agit, lors d'un arrêt du moteur, d'isoler la partie du système d'alimentation comprenant les injecteurs par tout moyen approprié. Le carburant liquide contenu dans la partie ainsi isolée peut ensuite être purgé vers un système de stockage approprié (liquide ou gazeux).

Ce concept évite donc toute fuite de carburant liquide vers le moteur et permet de ce fait un bon démarrage du moteur après un certain arrêt.

Ainsi la présente invention, a pour objet un système d'alimentation en carburant liquide sous pression d'au moins une chambre de combustion d'un moteur à combustion interne, comprenant un réservoir destiné au stockage sous pression du carburant liquide, des moyens d'injection sous pression du carburant dans au moins une chambre de combustion, une ligne entre ledit réservoir et lesdits moyens d'injection, une pompe disposée dans le réservoir ou bien sur ladite ligne, un régulateur de pression disposé dans ledit réservoir ou bien sur ladite ligne, caractérisé en ce. qu'il comprend en outre un moyen de stockage de fluide gazeux placé sur une dérivation de la ligne vers un système d'admission du moteur, un moyen d'isolation du moyen d'injection vis-à-vis du réservoir et des moyens de purge des moyens d'injection, disposés sur ladite dérivation, en amont dudit moyen de stockage.

Selon l'invention, le système comprend en outre un moyen d'isolation du moyen d'injection vis-à-vis du réservoir et des moyens de purge du moyen d'injection, disposés sur ladite dérivation, en amont de ladite capacité.

Conformément à un mode de réalisation de l'invention, le moyen d'injection consiste en au moins une rampe comprenant chacune plusieurs injecteurs.

Selon un mode particulier de réalisation de l'invention, le système comprend en outre une ligne de retour entre les moyens d'injection et le réservoir.

Plus précisément, les moyens d'isolation peuvent consister en au moins deux électro-vannes disposées respectivement sur la ligne et sur la ligne de retour, de part et d'autre des moyens d'injection.

Sans sortir du cadre de l'invention, les moyens d'isolation peuvent consister en une électro-vanne disposée sur la ligne entre le réservoir et la dérivation.

En accord avec l'invention, le système comprend en outre des moyens de commande (pilotage) des moyens d'isolation, en fonction de la durée et des conditions d'arrêt du moteur tels que la pression et/ou la température environnante.

D'autres caractéristiques, détails et avantages de l'invention apparaîtront mieux à la lecture de la description qui va suivre, faite à titre illustratif et nullement limitatif en référence aux dessins annexés :
- La figure 1 est un schéma d'un système d'alimentation selon un mode de réalisation de l'invention; et
- La figure 2 est un schéma d'un système d'alimentation selon un autre mode de réalisation de l'invention.

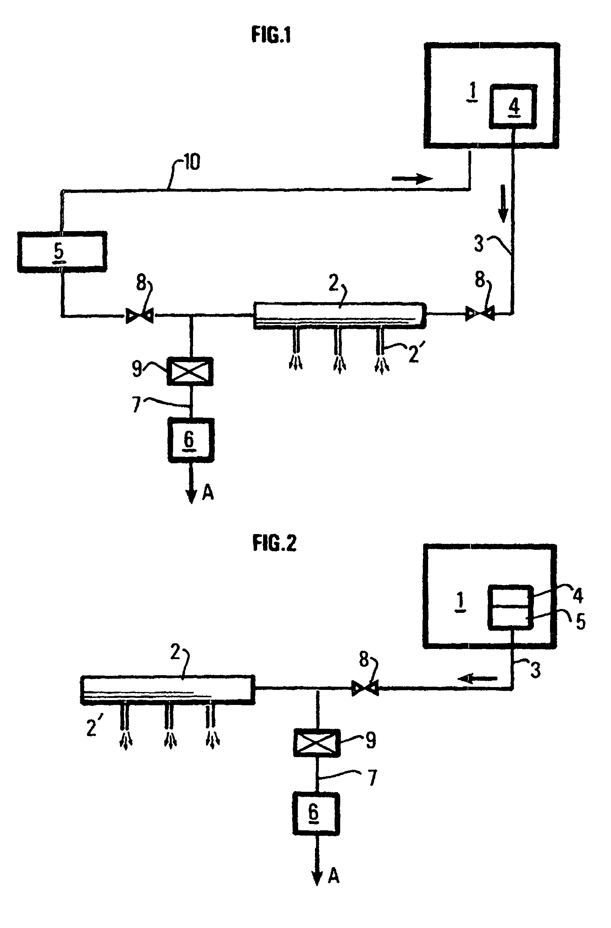

Sur la figure 1 est schématisé un système d'alimentation en carburant liquide selon une version de l'invention. Celui-ci comprend essentiellement un réservoir 1 qui stocke et maintient en pression le carburant.

Une ligne 3, également sous pression, part du réservoir 1 et aboutit vers des moyens 2 d'injection sous pression du carburant liquide qui débouchent soit directement dans des chambres de combustion soit dans le système d'admission du moteur.

Un système de type "common rail" peut être utilisé comme moyen d'injection 2. Avantageusement ce type d'injecteur permet un dosage du carburant très précis, dans le temps et dans l'espace. Il comporte un ensemble d'injecteurs 2'. La souplesse d'utilisation est largement appréciée par les motoristes et elle sera favorablement intégrée dans le cadre de la présente invention.

Le système d'alimentation comprend en outre une pompe 4 disposée soit dans le réservoir 1 soit sur la ligne d'alimentation 3. Un régulateur de pression 5 est par ailleurs prévu soit dans le réservoir 1, soit sur la ligne 3 (cas de la figure 2).

Par ailleurs une ligne de dérivation 7 est prévue, en piquage sur la ligne 3 en aval du moyen d'injection 2 relativement au sens de circulation du carburant dans la ligne 3. La ligne de dérivation 7 aboutit vers le système d'admission A du moteur.

Un moyen 6 de stockage de fluide gazeux de type canister, est disposé sur la ligne 7.

Selon le mode de réalisation de la figure 1 une ligne de retour 10 relie les moyens d'injection 2 et le réservoir 1. Le régulateur de pression 5 peut être disposé sur cette ligne 10.

Conformément à l'invention, on prévoit des moyens 8 destinés à isoler les moyens d'injection 2, 2' vis-à-vis du texte du circuit d'alimentation.

Selon la figure 1 les moyens 8 sont placés de part et d'autre des moyens d'injection 2.

En accord avec la figure 2, les moyens 8 d'isolation sont disposés sur la ligne 3 en amont du piquage de la ligne 7.

Par ailleurs, selon le mode de réalisation de la figure 2, le piquage de la ligne 7 est réalisé en amont du moyen d'injection (2)

Préférentiellement, les moyens 8 peuvent être constitués d'électrovannes pilotables en fonction notamment des conditions d'arrêt du moteur : durée, température, pression...

Par ailleurs, sur la ligne 7 de dérivation juste en amont du canister 6, on prévoit un moyen de purge 9 tel qu'une électro-vanne.

Ainsi lors d'un arrêt prolongé du moteur, les électrovannes 8 sont activées afin d'isoler la partie du système d'alimentation comprenant les injecteurs 2'. Le moyen de purge 9 est ensuite activé de façon à abaisser la pression dans la partie du système comprenant les injecteurs 2, 2' et la dérivation 7. Le carburant contenu dans cette partie du système d'alimentation passe alors de l'état liquide à l'état gazeux.

Une purge peut ainsi être réalisée pour le carburant vers le canister 6. En vidant ainsi cette zone "critique" du système d'alimentation, on évite tout problème de fuite de carburant vers le moteur. Le canister peut être par exemple constitué de charbon actif permettant l'adsorption du carburant gazeux.

On peut ainsi redémarrer le moteur après avoir fermé le moyen de purge 9 et réouvert les électrovannes 8. Ceci évite les inconvénients de l'art antérieur. Lors du redémarrage, le carburant piégé dans le canister 6 peut être destocké vers l'admission A et réutilisé pour la combustion.

## Revendications

1. Système d'alimentation en carburant liquide sous pression d'au moins une chambre de combustion d'un moteur à combustion interne, comprenant un réservoir (1) destiné au stockage sous pression du carburant liquide, des moyens (2) d'injection sous pression du carburant dans au moins une chambre de combustion, une ligne (3) entre ledit réservoir (1) et lesdits moyens (2) d'injection, une pompe (4) disposée dans le réservoir (1) ou bien sur ladite ligne (3), un régulateur de pression (5) disposé dans ledit réservoir (1) ou bien sur ladite ligne (3), **caractérisé en ce qu'**il comprend en outre un moyen de stockage de fluide gazeux (6) placé sur une dérivation (7) de la ligne (3) vers un système d'admission (A) du moteur, un moyen (8) d'isolation du moyen (2) d'injection vis-à-vis du réservoir (1) et des moyens (9) de purge des moyens d'injection (2), disposés sur ladite dérivation (7), en amont dudit moyen de stockage.

2. Système d'alimentation selon la revendication 1, **caractérisé en ce que** le moyen d'injection (2) consiste en au moins une rampe comprenant chacune plusieurs injecteurs (2').

3. Système d'alimentation selon l'une quelconque des revendications 1 ou 2, **caractérisé en ce qu'**il comprend en outre une ligne de retour (10) entre les moyens d'injection (2) et le réservoir (1).

4. Système selon la revendication 3, **caractérisé en ce que** les moyens d'isolation (8) consistent en au moins deux électro-vannes disposées respectivement sur la ligne (3) et sur la ligne de retour (10), de part et d'autre des moyens d'injection (2).

5. Système selon l'une quelconque des revendications 1 ou 2, **caractérisé en ce que** les moyens d'isolation (8) consistent en une électro-vanne disposée sur la ligne (3) entre le réservoir (1) et la dérivation (7).

6. Système selon l'une quelconque des revendications précédentes, **caractérisé en ce qu'**il comprend en outre des moyens de commande (pilotage) des moyens d'isolation (8), en fonction de la durée et des conditions d'arrêt du moteur.

7. Système selon la revendication 6, **caractérisé en ce que** les moyens de commande réagissent à la pression et/ou à la température environnante.

## Patentansprüche

1. System zur Zufuhr von unter Druck stehendem flüssigen Kraftstoff für mindestens eine Brennkammer eines Verbrennungsmotors, umfassend einen Tank (1) zur Speicherung des flüssigen Kraftstoffs unter Druck, Mittel (2) zur Einspritzung des Kraftstoffs unter Druck in mindestens eine Brennkammer, eine Leitung (3) zwischen dem besagten Tank (1) und den besagten Mitteln (2) zur Einspritzung, eine in dem Tank (1) oder auch auf der besagten Leitung (3) angeordnete Pumpe (4), einen in dem besagten Tank (1) oder auch auf der besagten Leitung (3) angeordneten Druckregler (5), **dadurch gekennzeichnet, dass** es außerdem ein an einem Abzweig (7) der Leitung (3) in Richtung eines Einlass-Systems (A) des Motors platziertes Mittel zur Speicherung von gasförmigem Fluid (6), ein Mittel (8) zur Trennung des Mittels (2) zur Einspritzung von dem Tank (1),und Mittel (9) zum Entleeren der Einspritzmittel (2), angeordnet auf dem besagten Abzweig (7), stromaufwärts des besagten Mittels zur Speicherung, umfasst.

2. System zur Zufuhr gemäß dem Anspruch 1, **dadurch gekennzeichnet, dass** das Mittel zur Einspritzung (2) aus mindestens einem-Verteiler besteht, welcher jeweils mehrere Einspritzer (2') umfasst.

3. System zur Zufuhr gemäß irgendeinem der Ansprüche 1 oder 2, **dadurch gekennzeichnet, dass** es außerdem eine Rückführleitung (10) zwischen den Mitteln zur Einspritzung (2) und dem Tank (1) umfasst.

4. System gemäß dem Anspruch 3, **dadurch gekennzeichnet, dass** die Mittel zur Trennung (8) aus mindestens zwei Elektroventilen bestehen, welche in der Leitung (3) bzw. in der Rückführleitung (10) angeordnet sind, auf beiden Seiten der Mittel zur Einspritzung (2).

5. System nach irgendeinem der Ansprüche 1 oder 2, **dadurch gekennzeichnet, dass** die Mittel zur Trennung (8) aus einem Elektroventil bestehen, welches in der Leitung (3) zwischen dem Tank (1) und dem Abzweig (7) angeordnet ist.

6. System nach irgendeinem der vorhergehenden Ansprüche, **dadurch gekennzeichnet, dass** es außerdem Mittel zur Bedienung (Steuerung) der Mittel zur Trennung (8) umfasst, in Abhängigkeit von der Dauer und den Bedingungen eines Motorstillstandes.

7. System nach dem Anspruch 6, **dadurch gekennzeichnet, dass** die Mittel zur Bedienung auf den Druck und / oder auf die Umgebungstemperatur ansprechen.

## Claims

1. System for supplying liquid fuel under pressure to at least one combustion chamber of an internal combustion engine, comprising a tank (1) designed for storage of the liquid fuel under pressure, means (2) for injection of the fuel under pressure into at least one combustion chamber, a line (3) between said tank (1) and said means (2) for injection, a pump (4) disposed in the tank (1) or on said line (3), a pressure regulator (5) disposed in said tank (1) or on said line (3), ***characterised in that*** it additionally comprises a means for storage of gaseous fluid (6) located on a branch (7) of the line (3) to an inlet system (A) of the engine, a means (8) for isolation of the means (2) for injection with respect to the tank (1) and means (9) for purging of the means (2) for injection, disposed on said branch (7), upstream of said means for storage.

2. Supply system according to claim 1, ***characterised in that*** the means (2) for injection consists of at least one manifold each comprising a plurality of injectors (2').

3. Supply system according to one of claims 1 or 2, ***characterised in that*** it additionally comprises a return line (10) between the means (2) for injection and the tank (1).

4. System according to claim 3, ***characterised in that*** the means (8) for isolation consist of at least two electro valves disposed respectively on the line (3) and on the return line (10), on either side of the means (2) for injection.

5. System according to any one of claims 1 or 2, ***characterised in that*** the means (8) for isolation consist of an electro valve disposed on the line (3) between the tank (1) and the branch (7).

6. System according to any one of the preceding claims, ***characterised in that*** it additionally comprises means for operation (control) of the means (8) for isolation as a function of the duration and conditions of stoppage of the engine.

7. System according to claim 6, ***characterised in that*** the means for operation react to the pressure and/or to the ambient temperature.
